(19) **Europäisches Patentamt / European Patent Office / Office européen des brevets**

(11) **EP 3 913 019 B1**

(12) **EUROPEAN PATENT SPECIFICATION**

(45) Date of publication and mention
of the grant of the patent:
**08.07.2026 Bulletin 2026/28**

(21) Application number: **21174354.7**

(22) Date of filing: **18.05.2021**

(51) International Patent Classification (IPC):
**C08L 7/00** *(2006.01)*    **C09D 107/00** *(2006.01)*
**C09D 109/00** *(2006.01)*    **C09D 109/06** *(2006.01)*
**F16L 11/00** *(2006.01)*    **F16L 11/04** *(2006.01)*

(52) Cooperative Patent Classification (CPC):
(C-Sets available)
**C09D 107/00; C08L 7/00; C09D 109/00;
C09D 109/06;** F16L 11/04    (Cont.)

(54) **COATING RUBBER COMPOSITION FOR FIBER AND MARINE HOSE**

BESCHICHTUNGSGUMMIZUSAMMENSETZUNG FÜR FASER- UND SCHIFFSSCHLAUCH

COMPOSITION DE CAOUTCHOUC DE REVÊTEMENT POUR TUYAU FIBRE ET MARIN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.05.2020 JP 2020089456**

(43) Date of publication of application:
**24.11.2021 Bulletin 2021/47**

(73) Proprietor: **The Yokohama Rubber Co., Ltd.
Hiratsuka-shi, Kanagawa 254-8601 (JP)**

(72) Inventor: **IKAI, Koichi
Kanagawa, 254-8601 (JP)**

(74) Representative: **Grünecker Patent- und
Rechtsanwälte
PartG mbB
Leopoldstraße 4
80802 München (DE)**

(56) References cited:
**EP-A1- 1 676 876       EP-A1- 2 316 879
EP-A1- 3 139 075       US-A- 4 935 297
US-A1- 2008 009 570    US-A1- 2014 093 729
US-A1- 2015 368 448    US-A1- 2017 080 754
US-A1- 2020 062 934**

(52) Cooperative Patent Classification (CPC): (Cont.)

C-Sets
**C08L 7/00, C08L 9/00, C08L 9/06**

## Description

Technical Field

The present invention relates to a coating rubber composition for fibers and a marine hose.

Background Art

In the related art, rubber products are typically reinforced by reinforcing materials, such as fiber reinforcing materials (reinforcing materials formed from fibers) to enhance the mechanical strength. Examples of the fiber reinforcing materials include polyester fibers and polyamide fibers.

For example, Patent Document 1 proposes a fiber-reinforced rubber product in which a rubber body is reinforced by polyester fibers, the rubber body being formed by subjecting a rubber composition containing from 1.0 to 5.0 PHR of a maleimide-based vulcanizing agent to molding vulcanization, to provide a high quality fiber-reinforced rubber product that is reinforced by polyester fibers by preventing reduction of high strength and adhesiveness of polyester fibers due to vulcanization.

Furthermore, rubber products include a large product such as a large diameter hose. Specific examples of the large diameter hose include a marine hose. A marine hose is used for, for example, transporting petroleum over the sea.

In a case where a large product having, for example, a rubber layer and a reinforcing layer formed by a fiber reinforcing material or a coating rubber (e.g., marine hose) is produced, vulcanization time of the rubber layer needs to be long.

Meanwhile, by making the vulcanization time long as described above, a problem of reduction of adhesiveness between the fiber reinforcing material and the coating rubber in the reinforcing layer occurs.

With regard to the problems described above, for example, Patent Document 2 proposes a method of producing a hose for fluid transportation including coating an inner surface rubber layer on a periphery of a mandrel, providing, on the periphery of the inner surface rubber layer, at least one reinforcing layer group formed by layering reinforcing layers formed from a coating rubber containing a butadiene rubber and organic fiber cords, forming a hose body by coating the outer side of the provided reinforcing layer group with an outer surface rubber layer, and then subjecting the hose body to steam vulcanization, where organic fibers of the organic fiber cords constituting each of the reinforcing layers use polyketone fibers or composite fibers of polyketone fibers and other fibers. Patent Document 3 discloses a rubber cure system that includes an amine-free accelerator; a bismaleimide; and an alkylphenol disulfide. Further discloses is a rubber composition including this rubber cure system and at least one sulfur-vulcanizable elastomer containing olefinic unsaturation. Patent Literature 4 provides a rubber mixture and a tire made of the same. The rubber mixture consists essentially of at least one kind of polar or non-polar rubber, at least one kind of filler, at least one kind of vulcanizing agent, at least one kind of accelerant, an optional anti-scorching agent, and an optional aromatic material. The accelerant is a compound containing two or more X-Y single bonds, wherein X is selected from element O and S, and Y is selected from element N and P. Patent Literature 5 discloses a rubber composition for coating a fiber cord includes a diene rubber, a carbon black, and a nitrone compound having a carboxy group; the diene rubber includes a natural rubber and a styrene-butadiene rubber and/or a butadiene rubber, wherein a content of the natural rubber in a total of the diene rubber and the nitrone compound is not greater than 65 mass %; a content of the carbon black is 40 to 67 parts by mass per 100 parts by mass of a total of the diene rubber and the nitrone compound; and a content of the nitrone compound is 0.1 to 10 parts by mass per 100 parts by mass of a total of the diene rubber and the nitrone compound. Patent Literature 6 provides a rubber composition comprising: 2 to 2.9 parts by weight of sulfur, 0.6 to 10 parts by weight of at least one compound selected from the group consisting of a cresol resin, a resorcin condensate, and a modified resorcin condensate, and 10 to 55 parts by weight of a carbon black and/or silica, based on 100 parts by weight of a rubber component comprising a natural rubber and/or isoprene rubber and at least two kinds of synthetic rubbers selected from the group consisting of butadiene rubber, modified butadiene rubber, styrene-butadiene rubber, and modified styrene-butadiene rubber. Patent Literature 7 discloses a reinforcing cord including at least one strand. The strand includes a bundle of filaments that are bundled and twisted together in one direction, and a coating layer that is formed on at least the surface of the bundle. The bundle consists essentially of carbon fiber filaments. The coating layer is a coating layer that is formed from an aqueous treatment agent containing a rubber latex and a crosslinking agent as essential components and a filler as an optional component. In the aqueous treatment agent, the total of the mass of the crosslinking agent and the mass of the filler is in a range of 1 to 50% of the mass of rubber in the rubber latex. Patent Literature 8 discloses rubber-reinforcing fibrous materials, which each comprise fibers and a coat formed on the fibers. The coat is formed by applying a rubbery adhesive composition on the fibers and then thermally treating the rubbery adhesive composition-applied fibers. The rubbery adhesive composition is mainly composed of rubber latex and mixed with a bismaleimide compound at a mixing ratio of 0.25 to 5 relative to 100 of the rubber latex in terms of weight. Patent Literature 9 discloses rubber composition for hoses, containing 80 parts by mass or more of an acrylonitrile butadiene rubber (NBR) in 100 parts by mass of the rubber component, while containing 1-4 parts by mass of a phenolic resin and 1-5 parts by mass of a thiuram compound and serving as a vulcanization accelerator, respectively per 100 parts by mass of the rubber component. Patent Literature 10 discloses a high-elasticity rubber characterized by comprising a rubber component, a sulfenamide-based vulcanization accelerator, a bismaleimide derivative and sulfur. Patent Literature 11 discloses a method of manufacturing a marine hose that includes a sponge layer. The marine hose includes at least a base hose, a sponge layer, a foam rubber layer, and a cover rubber layer.

Citation List

Patent Literature

Patent Document 1: JP 11-269276 A
Patent Document 2: JP 2010-173110 A
Patent Document 3: EP 1 676 876 A1
Patent Document 4: US 2020/062934 A1
Patent Document 5: US 2017/080754 A1
Patent Document 6: US 2008/009570 A1
Patent Document 7: US 2014/093729 A1
Patent Document 8: US 4 935 297 A
Patent Document 9: US 2015/368448 A1
Patent Document 10: EP 2 316 879 A1
Patent Document 11: EP 3 139 075 A1

Summary of Invention

Technical Problem

In such circumstances, the inventors of the present invention prepared a coating rubber composition for fibers based on Patent Document 1 as a reference, applied this to a fiber reinforcing material, and evaluated. It was found that, for adhesiveness between the fiber reinforcing material and the coating rubber (formed by vulcanizing the composition) after vulcanization for a long period of time (hereinafter, this may simply be referred to as "adhesiveness"), such a composition exhibits low adhesiveness (Comparative Example 2).

It was found that a composition prepared using Patent Document 2 as a reference may not satisfy the level of adhesiveness that has been required today (Comparative Example 1).

Note that, because a ternary rubber composition containing a natural rubber, a styrene-butadiene rubber, and a butadiene rubber as the rubber component is a ternary system, it is difficult to form a uniformly mixed state of the rubber composition. Furthermore, in a case where a bismaleimide compound is further added to the ternary rubber composition and the rubber composition does not become uniform, it was presumed that the required level of adhesiveness cannot be achieved.

An object of the present invention is to provide a coating rubber composition for fibers, the coating rubber composition exhibiting excellent adhesiveness to a fiber reinforcing material even after vulcanization for a long period of time.

Furthermore, another object of the present invention is to provide a marine hose.

Solution to Problem

As a result of diligent research to solve the problems described above, the inventors of the present invention found that a composition including a rubber component containing a natural rubber, a styrene-butadiene rubber, and a butadiene rubber, a tackifier, sulfur, and a bismaleimide compound achieves excellent adhesiveness to a fiber reinforcing material even after vulcanization for a long period of time, and thus completed the present invention.

An embodiment of the present invention is based on the findings described above, and specifically solves the problems described above by the following configurations.

[1] A coating rubber composition for fibers including:

a rubber component containing a natural rubber, a styrene-butadiene rubber, and a butadiene rubber;
a tackifier;

sulfur; and
a bismaleimide compound,
wherein the tackifier contains an aliphatic petroleum resin.

[2] The coating rubber composition for fibers according to [1], wherein a content of the butadiene rubber is from 15 parts by mass to 30 parts by mass per 100 parts by mass of the rubber component.
[3] The coating rubber composition for fibers according to [1] or [2], wherein a content of the bismaleimide compound is from 0.2 parts by mass to 1.5 parts by mass per 100 parts by mass of the rubber component.
[4] The coating rubber composition for fibers according to any one of [1] to [3], wherein a content of the tackifier is from 2.0 parts by mass to 6.0 parts by mass per 100 parts by mass of the rubber component.
[5] A marine hose formed by using the coating rubber composition for fibers comprising:

a rubber component containing a natural rubber, a styrene-butadiene rubber, and a butadiene rubber;
a tackifier;
sulfur; and
a bismaleimide compound,
wherein the tackifier contains an aliphatic petroleum resin.

Advantageous Effects of Invention

The coating rubber composition for fibers according to an embodiment of the present invention achieves excellent adhesiveness to the fiber reinforcing material even after vulcanization for a long period of time.
The marine hose according to an embodiment of the present invention achieves excellent adhesiveness between the coating rubber and the fiber reinforcing material.

Description of Embodiments

Embodiments of the present invention will be described in detail below.
Note that in the present specification, numerical ranges indicated using "(from)... to..." include the former number as the lower limit value and the latter number as the upper limit value.
In the present specification, unless otherwise indicated, a substance corresponding to each component can be used alone or in combination of two or more types thereof. In a case where a component includes two or more types of substances, content of component means the total content of the two or more types of substances.
In the present specification, "exhibiting superior effect of the present invention" may mean a case where adhesiveness between the coating rubber and the fiber reinforcing material after vulcanization for a long period of time (also simply referred to as "adhesiveness") is superior.

Coating rubber composition for fibers

The coating rubber composition for fibers according to an embodiment of the present invention (composition according to an embodiment of the present invention) is a coating rubber composition for fibers including:

a rubber component containing a natural rubber, a styrene-butadiene rubber, and a butadiene rubber;
a tackifier;
sulfur; and
a bismaleimide compound,
wherein the tackifier contains an aliphatic petroleum resin.

Each of the components included in the composition according to an embodiment of the present invention will be described in detail below.

Rubber component

In an embodiment of the present invention, the rubber component contains a natural rubber (NR), a styrene-butadiene rubber (SBR), and a butadiene rubber (BR).
The rubber component may further contain a rubber besides NR, SBR, and BR. The rubber other than NR and the like described above is not particularly limited.
The rubber component is preferably only formed with NR, SBR, and BR from the perspective of great ease in production of the rubber composition and exhibiting superior effect of the present invention.

Natural rubber

In an embodiment of the present invention, the natural rubber (NR) as the rubber component is not particularly limited. Examples thereof include known ones.

• Content of NR

The content of NR is preferably from 40 parts by mass to 70 parts by mass, and more preferably 50 parts by mass or greater and less than 60 parts by mass, per 100 parts by mass of the rubber component from the perspective of exhibiting superior effect of the present invention, excellent initial elongation at break, and excellent balance between high adhesive strength to fibers (fiber reinforcing material) (e.g., after initial vulcanization) and heat aging resistance, and excellent processability of the composition (e.g., mixing processability of the composition, the same applies hereinafter).

Styrene-butadiene rubber

In an embodiment of the present invention, the styrene-butadiene rubber (SBR) as the rubber component is not particularly limited as long as the styrene-butadiene rubber is a copolymer of styrene and butadiene. Examples thereof include known ones.

• Weight average molecular weight of SBR

The weight average molecular weight of SBR is preferably from 300000 to 1000000, and more preferably from 400000 to 800000, from the perspective of exhibiting superior effect of the present invention, excellent physical properties (e.g., tensile properties, the same applies hereinafter), and excellent processability of the composition.
The weight average molecular weight of SBR can be measured by gel permeation chromatography (GPC) calibrated with polystyrene standards using tetrahydrofuran (THF) as a solvent.

• Styrene amount or the like of SBR

The styrene amount of SBR (content of structural unit by styrene in the entire SBR) is preferably from 20.0 to 35.0 mass%, and more preferably from 22.5 to 24.5 mass%, from the perspective of exhibiting superior effect of the present invention and exhibiting excellent physical properties or processability of the composition.
The styrene amount of SBR can be measured by $^1$H-NMR.
Note that the value obtained by subtracting the styrene amount from 100 mass% can be used as the content of structural unit by butadiene in the entire SBR.
In the entire SBR, a greater content of the structural unit by butadiene is preferred due to high possibility of increasing reaction sites for the bismaleimide compound described below and exhibition of superior effect of the present invention.

• Content of SBR

The content of SBR is preferably from 15 parts by mass to 30 parts by mass, and more preferably from 20 to 30 parts by mass, per 100 parts by mass of the rubber component from the perspective of exhibiting superior effect of the present invention and exhibiting excellent physical properties or processability of the composition.

Butadiene rubber

In an embodiment of the present invention, the butadiene rubber (BR) as the rubber component is not particularly limited. Examples thereof include known ones.
By using a combination of BR and the bismaleimide compound described above, an embodiment of the present invention exhibits superior effect of the present invention.
One preferred embodiment of the butadiene rubber is, for example, a homopolymer of butadiene.

• Weight average molecular weight of BR

The weight average molecular weight of BR is preferably from 300000 to 1000000, and more preferably from 400000 to 800000, from the perspective of exhibiting superior effect of the present invention and excellent physical properties or processability of the composition.

The weight average molecular weight of the BR can be measured by gel permeation chromatography (GPC) calibrated with polystyrene standards using tetrahydrofuran (THF) as a solvent.

• Cis-1,4-bonding of BR

The cis-1,4-bonding amount of BR (content of structural unit by cis-1,4-bonding of the butadiene in the entire BR) is preferably from 90 to 98%, and more preferably from 95 to 98%, from the perspective of increasing reaction sites for the bismaleimide compound described below, exhibiting superior effect of the present invention, and exhibiting excellent physical properties.

The cis-1,4-bonding amount of BR can be measured by FT-IR.

• Content of butadiene rubber

The content of the butadiene rubber is preferably from 15 parts by mass to 30 parts by mass, and more preferably from 20 to 30 parts by mass, per 100 parts by mass of the rubber component from the perspective of exhibiting superior effect of the present invention, excellent initial elongation at break, and excellent balance between high adhesive strength to fibers (fiber reinforcing material) (e.g., after initial vulcanization) and heat aging resistance, and excellent processability of the composition.

The heat aging resistance can be evaluated by retention rate of elongation at break after heat aging relative to elongation at break before the heat aging of a rubber after curing obtained by the rubber composition. In an embodiment of the present invention, in a case where the retention rate of elongation at break is 80% or greater, heat aging resistance is excellent and is thus preferred.

Tackifier

Tackifier contained in the composition according to an embodiment of the present invention is not particularly limited as long as the tackifier is a substance that can impart adhesiveness to the coating rubber composition for fibers.

Tackifier enables the composition according to an embodiment of the present invention to exhibit excellent processability when the composition according to an embodiment of the present invention is applied to fibers (fiber reinforcing material) (e.g., ease of adhesion of the composition according to an embodiment of the present invention and the fibers (fiber reinforcing material) in calendar processing).

From the perspective of exhibiting superior effect of the present invention and exhibiting excellent processability when the composition according to an embodiment of the present invention is applied to the fibers (fiber reinforcing material), the tackifier contains an aliphatic petroleum resin.

Examples of the aliphatic petroleum resin include C5 petroleum resins (e.g., resins obtained by polymerizing fractions such as isoprene, 1,3-pentadiene, cyclopentadiene, methylbutene, and pentene).

The content of the tackifier is preferably from 2.0 parts by mass to 6.0 parts by mass per 100 parts by mass of the rubber component from the perspective of exhibiting superior effect of the present invention and exhibiting excellent processability when the composition according to an embodiment of the present invention is applied to the fibers (fiber reinforcing material).

Sulfur

Sulfur contained in the composition according to an embodiment of the present invention is not particularly limited as long as the sulfur is a substance used in vulcanization of the diene rubber. Examples of the method include a known method.

In an embodiment of the present invention, the sulfur can function as a vulcanizing agent.

• Content of sulfur

The content of the sulfur is preferably from 1.0 to 3.0 parts by mass, and more preferably 1.5 parts by mass or greater and less than 2.5 parts by mass, per 100 parts by mass of the rubber component from the perspective of exhibiting superior effect of the present invention.

The content of the sulfur per 100 parts by mass of the rubber component is preferably greater than the content of the bismaleimide compound described below per 100 parts by mass of the rubber component from the perspective of exhibiting superior effect of the present invention.

Bismaleimide compound

Bismaleimide compound contained in the composition according to an embodiment of the present invention is not particularly limited as long as the bismaleimide compound is a compound having two maleimide groups.

The maleimide groups contained in the bismaleimide compound can react (e.g., radical reaction) with a diene rubber (e.g., NR, SBR, BR).

In an embodiment of the present invention, the bismaleimide compound can function as a vulcanizing agent or a crosslinking agent.

Examples of the bismaleimide compound include compounds in which a nitrogen atom of each of the maleimide groups bonds to a divalent hydrocarbon group.

The divalent hydrocarbon group is not particularly limited. Examples thereof include aliphatic hydrocarbon, aromatic hydrocarbon, and combinations thereof. Among those, from the perspective of exhibiting superior effect of the present invention, a divalent aromatic hydrocarbon group is preferred, and a phenylene group is more preferred.

Examples of the bismaleimide compound include N,N'-ethylenebismaleimide, N,N'-cyclohexylenebismaleimide, N,N'-phenylenebismaleimide, and N,N'-naphthylenebismaleimide.

From the perspective of exhibiting superior effect of the present invention, the bismaleimide compound is preferably N,N'-phenylenebismaleimide, and is more preferably N,N'-m-phenylenebismaleimide (N.N'-m-phenylenedimaleimide).

• Content of bismaleimide compound

The content of the bismaleimide compound is preferably from 0.2 parts by mass to 1.5 parts by mass per 100 parts by mass of the rubber component from the perspective of exhibiting superior effect of the present invention and exhibiting excellent heat aging resistance.

• Combination of content of sulfur and content of bismaleimide compound

For the combination of the content of the sulfur and the content of the bismaleimide compound, in a case where the content of the sulfur is less than 2.0 parts by mass per 100 parts by mass of the rubber component, the content of the bismaleimide compound is preferably from 0.5 to 1.5 parts by mass, and more preferably from 0.8 to 1.2 parts by mass, per 100 parts by mass of the rubber component from the perspective of exhibiting superior effect of the present invention and exhibiting excellent heat aging resistance. The combination of the content of the sulfur and the content of the bismaleimide compound described above is referred to as "combination SB1".

In the combination SB1, the content of the sulfur is preferably greater than the content of the bismaleimide compound from the perspective of exhibiting superior effect of the present invention.

Furthermore, in a case where the content of the sulfur is 2.0 parts by mass or greater per 100 parts by mass of the rubber component, the content of the bismaleimide compound is preferably from 0.2 to 0.8 parts by mass, and more preferably from 0.2 to 0.4 parts by mass, per 100 parts by mass of the rubber component from the perspective of exhibiting superior effect of the present invention and exhibiting excellent heat aging resistance. The combination of the content of the sulfur and the content of the bismaleimide compound described above is referred to as "combination SB2".

From the perspective of exhibiting superior effect of the present invention and exhibiting excellent heat aging resistance, the combination of the content of the sulfur and the content of the bismaleimide compound is preferably the combination SB1 or the combination SB2.

In the combination SB1 (the content of the sulfur is less than 2.0 parts by mass), from the perspective of exhibiting superior effect of the present invention, the case where the content of the sulfur is greater than the content of the bismaleimide compound and the content of the bismaleimide compound is from 0.8 to 1.2 parts by mass per 100 parts by mass of the rubber component is more preferred.

In the combination SB2 (the content of the sulfur is 2.0 parts by mass or greater), from the perspective of exhibiting superior effect of the present invention and exhibiting excellent initial elongation at break, the content of the bismaleimide compound is more preferably from 0.2 to 0.4 parts by mass per 100 parts by mass of the rubber component.

• Additive

In the composition according to an embodiment of the present invention, additives may be further contained as necessary in addition to the components described above in the range that does not impair the effect of the present invention. Examples of the additive include fillers such as carbon black, zinc oxide, stearic acid, anti-aging agents, plasticizers, and vulcanization accelerators. The type and content of the additive can be appropriately selected.

The carbon black is not particularly limited. Examples of the method include a known method.

The content of the carbon black is preferably from 10 to 80 parts by mass per 100 parts by mass of the rubber component from the perspective of exhibiting superior effect of the present invention.

An example of the method of producing the composition according to an embodiment of the present invention is a method of production by mixing the components described above and the additive that can be used as necessary.

The composition according to an embodiment of the present invention can be used as the rubber composition for coating fibers.

In an embodiment of the present invention, the fibers are not particularly limited as long as the fibers are materials that can reinforce a rubber product (fiber reinforcing material).

Note that, in the present specification, the fiber to which the composition according to an embodiment of the present invention is applied may be referred to as "fiber reinforcing material".

The composition according to an embodiment of the present invention can be used to form a coating rubber by being applied to fibers (fiber reinforcing material).

After being applied to the fiber reinforcing material and vulcanized, the composition according to an embodiment of the present invention can be a coating rubber for coating the fiber reinforced member.

Examples of the fiber reinforcing material include continuous fiber reinforcing material (reinforcing material of fibers having adequate lengths) and discontinuous fiber reinforcing material (that is, short fibers. Typically fibers having lengths of 1 cm or shorter). From the perspective of achieving excellent reinforcing property of the resulting rubber product, the fiber reinforcing material is preferably a continuous fiber reinforcing material.

For example, the fiber diameter, fiber length, and shape of the continuous fiber reinforcing material are not particularly limited as long as the continuous fiber reinforcing material is a continuous fiber reinforcing material that can be generally used in rubber products (e.g., marine hoses).

Examples of the fiber reinforcing material to which the composition according to an embodiment of the present invention can be applied include polyester fibers (e.g., polyethylene terephthalate (PET) fibers, polyethylene naphthalate (PEN) fibers), polyamide fibers, and polyketone fibers.

From the perspective of exhibiting superior effect of the present invention, the fiber reinforcing material is preferably polyester fibers.

The fiber reinforcing material may be, for example, subjected to dip treatment. The dip treatment is not particularly limited. Examples thereof include known ones. Specific examples of the dip treatment include dip treatment by a combination of epoxy/resorcin-formaldehyde-latex (RFL) and dip treatment by a combination of chlorophenol/resorcin-formaldehyde-latex (RFL).

Examples for the form of the fiber reinforcing material include a reed screen-like form. Examples of the fiber reinforcing material having a reed screen-like form include a material having a plurality of warp arranged in parallel. The plurality of warp may be in a form of a bundle (cord), and a plurality of the bundles may be arranged in parallel. In the plurality of bundles, adjacent bundles may be in contact or adjacent bundles may be separated. A plurality of weft may be incorporated in a manner that the plurality of weft intersect the plurality of warp (or the plurality of bundles).

A method of applying the composition according to an embodiment of the present invention to the fiber reinforcing material is not particularly limited. Examples thereof include a method of forming a laminate by extrusion-molding the composition according to an embodiment of the present invention and the fiber reinforcing material, a method of forming a laminate by piling the fiber reinforcing material and a material obtained by forming the composition according to an embodiment of the present invention into a sheet shape, and a calendar molding method.

When a laminate is formed by the composition according to an embodiment of the present invention and the fiber reinforcing material, the fiber reinforcing material in the laminate may be a single layer or multiple layers. The same applies to the composition according to an embodiment of the present invention.

The composition according to an embodiment of the present invention is preferably arranged in a manner that the composition covers the fiber reinforcing material, and more preferably arranged in a manner that the composition covers the entire fiber reinforcing material.

In a case where the fiber reinforcing material is a layer form or a reed screen-like form, the composition according to an embodiment of the present invention is preferably arranged on the top and bottom of the fiber reinforcing material.

In a case where the fiber reinforcing material is multiple layers, it is preferable to arrange the composition according to an embodiment of the present invention in between adjacent fiber reinforcing materials.

• Vulcanization

The laminate having the composition according to an embodiment of the present invention and the fiber reinforcing material as described above can be vulcanized at, for example, from 120 to 160°C. The vulcanization may be performed under applied pressure.

The time required for the vulcanization is not particularly limited. For example, the time may be from 30 to 400 minutes. Because the composition according to an embodiment of the present invention exhibits excellent adhesiveness to the fiber reinforcing material even after vulcanization for a long period of time, the vulcanization time can be set long.

• Reinforcing layer

The reinforcing layer obtained by vulcanizing the laminate can have the coating rubber formed by subjecting the composition according to an embodiment of the present invention to vulcanization and the fiber reinforcing material. The coating rubber preferably covers at least a part of the fiber reinforcing material and more preferably covers the entire fiber reinforcing material.

Because the reinforcing layer is formed by using the composition according to an embodiment of the present invention, excellent adhesiveness to the fiber reinforcing material even after vulcanization for a long period of time is exhibited.

Examples of use of the composition according to an embodiment of the present invention include large diameter hoses, such as marine hoses, and conveyor belts.

Marine hose

The marine hose according to an embodiment of the present invention is a marine hose formed by using the coating rubber composition for fibers according to an embodiment of the present invention.

The coating rubber composition for fibers used in the marine hose according to an embodiment of the present invention is not particularly limited as long as the coating rubber composition is a coating rubber composition for fibers according to an embodiment of the present invention.

The components constituting the marine hose according to an embodiment of the present invention are not particularly limited. From the perspective of the coating rubber composition for fibers according to an embodiment of the present invention achieving excellent adhesiveness to the fiber reinforcing material even after vulcanization for a long period of time, the marine hose according to an embodiment of the present invention preferably has a reinforcing layer having the coating rubber formed by the coating rubber composition for fibers and a fiber reinforcing material. The fiber reinforcing material that can be contained in the marine hose according to an embodiment of the present invention is identical to that described above. In the reinforcing layer, the coating rubber preferably covers at least a part of the fiber reinforcing material and more preferably covers the entire fiber reinforcing material.

The marine hose according to an embodiment of the present invention may have the reinforcing layer in a form of a single layer or multiple layers.

The method of producing the marine hose according to an embodiment of the present invention is not particularly limited as long as the method uses the coating rubber composition for fibers according to an embodiment of the present invention. Examples of the method include a known method. The coating rubber composition for fibers is preferably used as a coating rubber composition to cover the fiber reinforcing material.

Examples

An embodiment of the present invention will be described below in detail by way of examples. However, an embodiment of the present invention is not limited to such examples.

Production of composition

The components shown in Table 1 below other than the vulcanization components (vulcanization accelerator DM and sulfur) were used in compositions (part by mass) shown in the same table and mixed by an agitator (kneading A). To the rubber obtained by the kneading A, the vulcanization components (vulcanization accelerator DM and sulfur) were then added in compositions (part by mass) shown in the same table and further mixed, and thus each composition (coating rubber composition for fibers) was produced.

Evaluation

The following evaluations were performed by using the composition produced as described above. The results are shown in Table 1.

• Initial tensile properties (initial strength at break and initial elongation at break)

The composition produced as described above was vulcanized at 150°C for 45 minutes with application of surface pressure of 2.0 MPa, and an initial rubber sheet having a thickness of 2 mm was obtained.

From the initial rubber sheet, a No. 3 dumbbell stipulated in JIS was punched out, and tensile test was performed in accordance with JIS K 6251:2017 at a tensile speed of 500 mm/min at 23°C. Thus, initial strength at break [MPa] and initial elongation at break (%) were measured.

A larger initial strength at break is preferred. The same applied to the initial elongation at break.

• Heat aging resistance test

Using the initial rubber sheet obtained as described above, heat aging resistance test was performed by placing a No. 3 dumbbell punched out from the initial rubber sheet at 70°C for 96 hours, in accordance with JIS K 6257:2017.

For each dumbbell after the heat aging resistance test, the tensile test that was identical to that for the initial tensile properties was performed, and strength at break [MPa] and elongation at break (%) after the heat aging resistance test were measured.

• Retention rate of strength at break after heat aging resistance test

The retention rate of the strength at break after the heat aging resistance test was determined by substituting the initial strength at break and the strength at break after the heat aging resistance test to the following equation.

Retention rate of strength at break after heat aging resistance test (%) = (strength at break after heat aging resistance test/initial strength at break) $\times$ 100

• Retention rate of elongation at break after heat aging resistance test

The retention rate of the elongation at break after the heat aging resistance test was determined by substituting the initial elongation at break and the elongation at break after the heat aging resistance test to the following equation.

Retention rate of elongation at break after heat aging resistance test (%) = (elongation at break after heat aging resistance test/initial elongation at break) $\times$ 100

•• Evaluation reference

In an embodiment of the present invention, in a case where the retention rate of elongation at break after the heat aging resistance test is 80% or greater, heat aging resistance is excellent and is thus preferred.

Adhesiveness evaluation after vulcanization

• Preparation of evaluation sample

A layer 1 of each of the compositions produced as described above (thickness: 3.0 mm),

a fiber reinforcing material 1 (a polyester reed screen that was chlorophenol/RFL dip-treated (dip treatment by a combination of chlorophenol-based compound and resorcin-formaldehyde-latex): available from Hyosung; the polyester fibers were in a reed screen-like form; in the polyester fibers, 45 to 50 bundles of warp were arranged in parallel; thickness of the polyester fibers: 1.0 mm; the same applies hereinafter),
a layer 2 of the composition produced as described above (thickness: 0.8 mm),
a fiber reinforcing material 2 (identical to the fiber reinforcing material 1), and
a layer 3 of the composition produced as described above (thickness: 3.0 mm)
were laminated in the above order, and thus a laminate having five layers was prepared. The width of the laminate was 1 inch.

Note that, the compositions used in the layer 1, the layer 2, and the layer 3 in one laminate were all identical composition.

Furthermore, the fiber reinforcing material 1 was arranged in a manner that the warp of the fiber reinforcing material 1 was orthogonal to the 1 inch width of the laminate. The fiber reinforcing material 2 was arranged in the direction that was identical to that of the fiber reinforcing material 1. The laminate had 25 warp bundles each as the fiber reinforcing materials 1 and 2 with respect to the 1 inch width.

• Vulcanization

The laminate was vulcanized at 150°C for 45 minutes or 300 minutes with application of pressure (surface pressure of 2.0 MPa), and an evaluation sample for evaluating the adhesiveness of the reinforcing layer after vulcanization for a long period of time was prepared.

The layers 1 to 3 in the laminate before the vulcanization (the layers of the coating rubber composition for fibers) becomes coating rubber in the evaluation sample after the vulcanization.

The overall thickness of the obtained evaluation sample was 6 mm. The fiber reinforcing materials 1 and 2 were embedded in an inner portion in the thickness direction and the width direction of each of the evaluation samples.

• Peel test

Using each of the evaluation samples prepared as described above, in accordance with JIS K 6256:2013, a peel test by which the fiber reinforcing material 1 and the fiber reinforcing material 2 were peeled off from an edge of the 1 inch width of the evaluation sample after the vulcanization was performed, peel strength (N/inch) was measured, and rubber coverage (covered area of the rubber at a peeled face after the peel test (%)) was visually observed.

• Evaluation criteria of adhesiveness after initial vulcanization (vulcanization time: 45 minutes)

When the vulcanization time of the vulcanization was 45 minutes (initial vulcanization), the case where the peel strength was 260 N/inch or greater and the rubber coverage was 90% or greater was evaluated as achieving excellent adhesiveness between the fiber reinforcing materials and the coating rubber after initial vulcanization.

When the peel strength was 260 N/inch or greater and the rubber coverage was 90% or greater, the case where the peel strength was greater was evaluated as achieving superior adhesiveness between the fiber reinforcing materials and the coating rubber after initial vulcanization.

On the other hand, the case where the peel strength was less than 260 N/inch or the rubber coverage was less than 90% was evaluated as having poor adhesiveness between the fiber reinforcing materials and the coating rubber after initial vulcanization.

• Evaluation criteria of adhesiveness after vulcanization for long period of time (vulcanization time: 300 minutes)

In an embodiment of the present invention, when the vulcanization time of the vulcanization was 300 minutes (vulcanization for a long period of time), the case where the peel strength was 245 N/inch or greater and the rubber coverage was 80% or greater was evaluated as achieving excellent adhesiveness between the fiber reinforcing materials and the coating rubber after vulcanization for a long period of time.

When the peel strength was 245 N/inch or greater and the rubber coverage was 80% or greater, the case where the peel strength was greater was evaluated as achieving superior adhesiveness between the fiber reinforcing materials and the coating rubber after vulcanization for a long period of time.

On the other hand, the case where the peel strength was less than 245 N/inch or the rubber coverage was less than 80% was evaluated as having poor adhesiveness between the fiber reinforcing materials and the coating rubber after vulcanization for a long period of time.

[Table 1-1]

| Table 1 | Comparative Example 1 | Example 1 | Example 2 | Example 3 |
|---|---|---|---|---|
| NR | 50 | 50 | 50 | 50 |
| SBR | 25 | 25 | 25 | 25 |
| BR | 25 | 25 | 25 | 25 |
| CB | 50 | 50 | 50 | 50 |
| Zinc oxide | 3.00 | 3.00 | 3.00 | 3.00 |
| Stearic acid | 2.00 | 2.00 | 2.00 | 2.00 |
| Tackifier (Aliphatic petroleum resin) | 4.0 | 4.0 | 4.0 | 4.0 |
| Vulcanization accelerator DM | 1.25 | 1.25 | 1.25 | 1.25 |
| Sulfur | 2.1 | 2.1 | 2.1 | 2.1 |

(continued)

| Table 1 | Comparative Example 1 | Example 1 | Example 2 | Example 3 |
|---|---|---|---|---|
| Bismaleimide compound (N,N'-m-phenylenedimaleimide) | - | 0.25 | 0.50 | 1.00 |
| Initial strength at break (MPa) | 19.0 | 17.8 | 17.8 | 17.4 |
| Initial elongation at break (%) | 690 | 694 | 654 | 649 |
| Retention rate of strength at break after heat aging resistance test | 86 | 97 | 98 | 96 |
| Retention rate of elongation at break after heat aging resistance test | 81 | 81 | 86 | 85 |
| Adhesiveness evaluation after initial vulcanization: polyester reed screen (p-chlorophenol-based dip) two-ply adhesion (vulcanization at 150°C for 45 min) | | | | |
| Peel strength (N/inch) | 260 | 301 | 297 | 301 |
| Rubber coverage (%) | 95 | 95 | 95 | 95 |
| Adhesiveness evaluation after vulcanization for long period of time: polyester (p-chlorophenol-based dip) two-ply adhesion (vulcanization at 150°C for 300 min) | | | | |
| Peel strength (N/inch) | 243 | 266 | 245 | 247 |
| Rubber coverage (%) | 70 | 87.5 | 90 | 90 |

[Table 1-2]

| Table 1 | Example 4 | Example 5 | Example 6 | Example 7 |
|---|---|---|---|---|
| NR | 50 | 50 | 50 | 60 |
| SBR | 25 | 25 | 25 | 25 |
| BR | 25 | 25 | 25 | 15 |
| CB | 50 | 50 | 50 | 50 |
| Zinc oxide | 3.00 | 3.00 | 3.00 | 3.00 |
| Stearic acid | 2.00 | 2.00 | 2.00 | 2.00 |
| Tackifier (Aliphatic petroleum resin) | 4.0 | 4.0 | 4.0 | 4.0 |
| Vulcanization accelerator DM | 1.25 | 1.25 | 1.25 | 1.25 |
| Sulfur | 1.95 | 1.80 | 1.80 | 2.1 |
| Bismaleimide compound (N,N'-m-phenylenedimaleimide) | 1.00 | 1.00 | 0.50 | 1.00 |
| Initial strength at break (MPa) | 18.0 | 17.9 | 17.2 | 17.5 |
| Initial elongation at break (%) | 629 | 630 | 641 | 567 |
| Retention rate of strength at break after heat aging resistance test | 95 | 94 | 104 | 107 |
| Retention rate of elongation at break after heat aging resistance test | 86 | 83 | 92 | 95 |
| Adhesiveness evaluation after initial vulcanization: polyester reed screen (p-chlorophenol-based dip) two-ply adhesion (vulcanization at 150°C for 45 min) | | | | |
| Peel strength (N/inch) | 265 | 285 | 275 | 269 |
| Rubber coverage (%) | 95 | 95 | 95 | 95 |
| Adhesiveness evaluation after vulcanization for long period of time: polyester (p-chlorophenol-based dip) two-ply adhesion (vulcanization at 150°C for 300 min) | | | | |
| Peel strength (N/inch) | 261 | 266 | 247 | 245 |

(continued)

| Table 1 | Example 4 | Example 5 | Example 6 | Example 7 |
|---|---|---|---|---|
| Rubber coverage (%) | 85 | 87.5 | 90 | 85 |

[Table 1-3]

| Table 1 | Comparative Example 2 | Comparative Example 3 | Comparative Example 4 | Example 8 |
|---|---|---|---|---|
| NR | 75 | 60 | 75 | 50 |
| SBR | 25 | 25 | 25 | 25 |
| BR | | 15 | | 25 |
| CB | 50 | 50 | 50 | 50 |
| Zinc oxide | 3.00 | 3.00 | 3.00 | 3.00 |
| Stearic acid | 2.00 | 2.00 | 2.00 | 2.00 |
| Tackifier (Aliphatic petroleum resin) | 4.0 | 4.0 | 4.0 | 4.0 |
| Vulcanization accelerator DM | 1.25 | 1.25 | 1.25 | 1.25 |
| Sulfur | 2.1 | 2.1 | 2.1 | 2.1 |
| Bismaleimide compound (N,N'-m-phenylenedimaleimide) | 1.00 | - | - | 2.00 |
| Initial strength at break (MPa) | 19.5 | 19.2 | 20.3 | 17.6 |
| Initial elongation at break (%) | 560 | 662 | 644 | 689 |
| Retention rate of strength at break after heat aging resistance test | 101 | 87 | 98 | 89 |
| Retention rate of elongation at break after heat aging resistance test | 91 | 85 | 91 | 70 |
| Adhesiveness evaluation after initial vulcanization: polyester reed screen (p-chlorophenol-based dip) two-ply adhesion (vulcanization at 150°C for 45 min) | | | | |
| Peel strength (N/inch) | 212 | 255 | 212 | 260 |
| Rubber coverage (%) | 92.5 | 95 | 80 | 95 |
| Adhesiveness evaluation after vulcanization for long period of time: polyester (p-chlorophenol-based dip) two-ply adhesion (vulcanization at 150°C for 300 min) | | | | |
| Peel strength (N/inch) | 196 | 227 | 169 | 255 |
| Rubber coverage (%) | 85 | 62.5 | 47.5 | 85 |

Details of each component indicated in Table 1 are as follows.

- NR: Natural rubber. SIR-20

  - SBR: Styrene-butadiene rubber. Styrene-butadiene rubber. Trade name: Nipol 1502, available from Zeon Corporation. Weight average molecular weight: 490000, styrene amount: 23.5 mass%.
  - BR: Butadiene rubber, trade name "Nipol BR1220", available from Zeon Corporation. Weight average molecular weight: 520000, cis-1,4-bonding amount: 98%.
  - CB: GPF grade carbon black, trade name "Niteron #GN", available from Nippon Steel Carbon Co., Ltd.
  - Zinc oxide: Zinc Oxide Type III, available from Seido Chemical Industry Co., Ltd.
  - Stearic acid: Beads Stearic Acid YR, available from Nippon Oil & Fats Co., Ltd.
  - Tackifier (aliphatic petroleum resin): trade name: Quitone A100, available from Zeon Corporation.

- Vulcanization accelerator DM: Di-2-benzothiazolyl disulfide (NOCCELER DM-PO (DM), available from Ouchi Shinko Chemical Industrial Co., Ltd.)

- Sulfur: Powdered sulfur, available from Karuizawa Refinery Ltd.
- Bismaleimide compound (N,N'-m-phenylenedimaleimide): trade name: Vulnoc PM, available from Ouchi Shinko Chemical Industrial Co., Ltd.

As can be seen from the results shown in Table 1, Comparative Examples 1 and 3 containing no bismaleimide compound exhibited poor adhesiveness to the fiber reinforcing material after the vulcanization for a long period of time.

Comparative Example 2 containing no butadiene rubber exhibited poor adhesiveness to the fiber reinforcing material after the vulcanization for a long period of time.

Comparative Example 4 containing no butadiene rubber and no bismaleimide compound exhibited poor adhesiveness to the fiber reinforcing material after the vulcanization for a long period of time.

Meanwhile, each of the coating rubber compositions for fibers according to embodiments of the present invention exhibited excellent adhesiveness to the fiber reinforcing material even after the vulcanization for a long period of time.

Note that the compositions produced in Examples 1 to 8 (coating rubber compositions for fibers) were all in uniform conditions when visually observed, and mixing properties of the coating rubber compositions for fibers were excellent.

## Claims

1. A coating rubber composition for fibers comprising:

    a rubber component containing a natural rubber, a styrene-butadiene rubber, and a butadiene rubber;
    a tackifier;
    sulfur; and
    a bismaleimide compound,
    wherein the tackifier contains an aliphatic petroleum resin.

2. The coating rubber composition for fibers according to claim **1,** wherein a content of the butadiene rubber is from 15 parts by mass to 30 parts by mass per 100 parts by mass of the rubber component.

3. The coating rubber composition for fibers according to claim 1 or 2, wherein a content of the bismaleimide compound is from 0.2 parts by mass to 1.5 parts by mass per 100 parts by mass of the rubber component.

4. The coating rubber composition for fibers according to any one of claims 1 to 3, wherein a content of the tackifier is from 2.0 parts by mass to 6.0 parts by mass per 100 parts by mass of the rubber component.

5. A marine hose formed by using the coating rubber composition for fibers comprising:

    a rubber component containing a natural rubber, a styrene-butadiene rubber, and a butadiene rubber;
    a tackifier;
    sulfur; and
    a bismaleimide compound,
    wherein the tackifier contains an aliphatic petroleum resin.

## Patentansprüche

1. Beschichtungs-Kautschukzusammensetzung für Fasern, umfassend:

    eine Kautschukkomponente, die einen Naturkautschuk, einen Styrol-ButadienKautschuk und einen Butadienkautschuk enthält,
    einen Klebrigmacher,
    Schwefel und
    eine Bismaleimid-Verbindung,
    wobei der Klebrigmacher ein aliphatisches Erdölharz enthält.

**2.** Beschichtungs-Kautschukzusammensetzung für Fasern gemäß Anspruch 1, wobei ein Gehalt des Butadienkautschuks 15 Massenteile bis 30 Massenteile pro 100 Massenteile der Kautschukkomponente beträgt.

**3.** Beschichtungs-Kautschukzusammensetzung für Fasern gemäß Anspruch 1 oder 2, wobei ein Gehalt der Bismaleimid-Verbindung 0,2 Massenteile bis 1,5 Massenteile pro 100 Massenteile der Kautschukkomponente beträgt.

**4.** Beschichtungs-Kautschukzusammensetzung für Fasern gemäß einem der Ansprüche 1 bis 3, wobei ein Gehalt des Klebrigmachers 2,0 Massenteile bis 6,0 Massenteile pro 100 Massenteile der Kautschukkomponente beträgt.

**5.** Meeresschlauch, gebildet unter Verwendung der Beschichtungs-Kautschukzusammensetzung für Fasern, umfassend:

eine Kautschukkomponente, die einen Naturkautschuk, einen Styrol-ButadienKautschuk und einen Butadienkautschuk enthält,
einen Klebrigmacher,
Schwefel und
eine Bismaleimid-Verbindung,
wobei der Klebrigmacher ein aliphatisches Erdölharz enthält.

**Revendications**

**1.** Composition de caoutchouc de revêtement pour fibres comprenant :

un composant en caoutchouc contenant un caoutchouc naturel, un caoutchouc styrène-butadiène, et un caoutchouc butadiène ;
un agent collant ;
du soufre ; et
un composé bismaléimide,
dans laquelle l'agent collant contient une résine de pétrole aliphatique.

**2.** Composition de caoutchouc de revêtement pour fibres selon la revendication 1, dans laquelle une teneur en caoutchouc butadiène est de 15 parties en masse à 30 parties en masse pour 100 parties en masse du composant en caoutchouc.

**3.** Composition de caoutchouc de revêtement pour fibres selon la revendication 1 ou 2, dans laquelle une teneur en composé bismaléimide est de 0,2 partie en masse à 1,5 partie en masse pour 100 parties en masse du composant en caoutchouc.

**4.** Composition de caoutchouc de revêtement pour fibres selon l'une quelconque des revendications 1 à 3, dans laquelle une teneur en agent collant est de 2,0 parties en masse à 6,0 parties en masse pour 100 parties en masse du composant en caoutchouc.

**5.** Tuyau marin formé en utilisant la composition de caoutchouc de revêtement pour fibres comprenant :

un composant en caoutchouc contenant un caoutchouc naturel, un caoutchouc styrène-butadiène et un caoutchouc butadiène ;
un agent collant ;
du soufre ; et
un composé bismaléimide,
dans lequel l'agent collant contient une résine de pétrole aliphatique.

**EP 3 913 019 B1**

**REFERENCES CITED IN THE DESCRIPTION**

**Patent documents cited in the description**

- JP 11269276 A
- JP 2010173110 A
- EP 1676876 A1
- US 2020062934 A1
- US 2017080754 A1
- US 2008009570 A1
- US 2014093729 A1
- US 4935297 A
- US 2015368448 A1
- EP 2316879 A1
- EP 3139075 A1